# EUROPÄISCHE PATENTSCHRIFT

(11) **EP 1 136 327 B1**
(45) Veröffentlichungstag und Bekanntmachung des Hinweises auf die Patenterteilung: **19.01.2005**
(21) Anmeldenummer: 01105157.0
(22) Anmeldetag: 02.03.2001
(51) Int. Cl.: B60R 21/01

(54) **Sensorsystem zur Bestimmung der Insassenposition in Fahrzeugen**
Vehicle occupant position sensor
Détecteur de position d'occupant dans un véhicule

(30) Priorität: 23.03.2000 DE 10014381
(43) Veröffentlichungstag der Anmeldung: 26.09.2001
(73) Patentinhaber: SIEMENS AKTIENGESELLSCHAFT, 80333 München (DE)
(72) Erfinder: Doemens, Günter, Dr., 83607 Holzkirchen (DE); Mengel, Peter, Dr., 82223 Eichenau (DE)

(56) Entgegenhaltungen:
- US-A- 4 015 236
- US-A- 4 885 566
- US-A- 5 724 024
- US-A- 5 957 491

## Beschreibung

Die Erfindung betrifft ein Sensorsystem, durch das die Position eines in einem Fahrzeug befindlichen Insassen relativ zu diesem Fahrzeug weitestgehend ermittelbar ist. Hierzu werden Abstandsensoren eingesetzt, die die relative Lage eines Insassen aufnehmen können.

Heutige Personenwagen werden zum großen Teil mit sogenannten Airbags ausgerüstet. Diese aufblasbaren Luftbeutel werden heute fast ausschließlich durch die Überschreitung einer vorgegebenen Beschleunigung bzw. Verzögerung, die in der Regel am Fahrzeug gemessen wird, ausgelöst. Dabei wird nicht berücksichtigt, ob sich beispielsweise der Insasse gerade unmittelbar vor dem Airbag befindet oder ein Sitz in dem Fahrzeug belegt ist oder nicht. Weiterhin kann nicht erkannt werden, welche Art der Sitzbelegung vorliegt, ob der Sitz mit einem Kind, einem Erwachsenen oder beispielsweise mit einer Babytrage belegt ist. So kann es zu Auslösungen des Airbags kommen, obwohl keine Person durch den Airbag vor Verletzungen geschützt werden muss. Zum anderen kann jedoch auch eine Auslösung des Airbags bei nicht üblicher Sitzbelegung zu Verletzungen durch die Airbagauslösung führen. Eine unübliche Sitzbelegung liegt beispielsweise vor, wenn sich der Insasse momentan sehr nahe an der Windschutzscheibe befindet oder auch wenn sich ein Kleinkind auf dem Beifahrersitz befindet.

Die auf einem Fahrzeugsitz vorliegende Szene kann beispielsweise durch die optische Erfassung des Insassen in Verbindung mit einer Bildverarbeitung erkannt werden, wobei die Art der Sitzbelegung sowie die Position des Insassen, insbesondere des Beifahrers ermittelt wird. Bei dieser optischen Erfassung besteht die Notwendigkeit, dreidimensionale Bilder aufzunehmen und vollkommen unabhängig von der Umgebungsbeleuchtung zu verfahren. Ein derartiges System wird durch den Einsatz einer dreidimensional auflösenden CMOS-Kamera mit einer entsprechenden Laserbeleuchtung im Infrarotbereich verbessert. Dies ergibt wiederum Probleme bezüglich der Akzeptanz der Laserbeleuchtung. Darüber hinaus sind derartige optische Systeme relativ komplex, da hochintegrierte Chips, Prozessoren für die Bildverarbeitung, Laserbeleuchtung mit Leistungselektronik und entsprechende Optik kostenintensiv sind. Ferner können optische Systeme grundsätzlich durch Abdeckung oder Verschmutzung gestört werden.

In der amerikanischen Patentschrift US 4, 015, 236 wird eine Anordnung zur Feststellung und Überwachung des genauen Anlegens und der Verriegelung des Sicherheitsgurtes an einem Sitz in einem Fahrzeug offenbart. Dabei wird mit einem logischen System erkannt, ob der Sicherheitsgurt sich in einem vorbestimmten Sollbereich befindet. Eine Auswerteschaltung wertet dies anhand bestimmter vorgegebener Parameter aus und gibt gegebenenfalls ein entsprechendes System zu einer Alarmvorrichtung. Diese Vorrichtung soll den Insassen des Fahrzeugs dazu bewegen, einen nicht angelegten oder abnormal positionier Sicherheitsgurt ordnungsgemäß anzulegen. Eine Abstandsmessung kann mit einem System entsprechend diesem Stand der Technik nicht vorgenommen werden.

Ziel der Erfindung ist deshalb, die Bereitstellung eines Sensorsystems zur Bestimmung der Position eines Sicherheitsgurtes, bzw. der Insassenposition in einem Fahrzeug, dessen Betrieb störsicher und dessen technische Realisierung kostengünstig ist.

Die Lösung dieser Aufgabe geschieht durch ein Sensorsystem mit der Merkmalskombination entsprechend Anspruch 1 bzw. Anspruch 9. Vorteilhafte Ausgestaltungen können den Unteransprüchen entnommen werden.

Da bisher keine differenzierte Auslösung eines Airbags in einem Fahrzeug stattfindet, d. h. keine Auslösebedingungen herangezogen werden, die detailliertere Auskunft über die korrespondierenden Fahrzeuginsassen angeben, wird zunächst versucht, die Insassenposition sowie eventuell auch die Art einer Sitzbelegung zu ermitteln. Das durch die Erfindung vorgeschlagene System hat zum Ziel, unter Ausnutzung des Sicherheitsgurtes als Referenzposition für einen Insassen auf einem bestimmten Sitz, ein einfaches, robustes und kostengünstiges Sensorsystem zu schaffen, welches sowohl die Position des Insassen relativ zu einem Airbag als auch die Art der Sitzbelegung erfassen kann. Hierzu wird in dem Brustbereich, in dem der Sicherheitsgurt am Insassen anliegt, ein langgestreckter elektrischer Leiter zur Magnetfelderzeugung eingebracht. Denkbar sind auch verschiedenartig ausgeformte, in den Gurt eingeflochtene Spulen (Luftspulen). Diese magnetfelderzeugenden den Einheiten werden von einem Ende des Sicherheitsgurtes vorzugsweise mit Wechselstrom versorgt. Das Magnetfeld, das senkrecht zur Längserstreckung des Gurtes bzw. der Spulenachse definiert mit zunehmendem Radius abnimmt, kann beispielsweise von Induktionsspulen detektiert werden. Die Entfernung d_{A} eines Insassen zum Armaturenbrett kann somit über eine Induktionsspule anhand deren Ausgangsspannung U_{A} detektiert werden. Dies beruht auf der Tatsache, dass ein Magnetfeld , das im Sicherheitsgurt durch einen elektrischen Leiter erzeugt wird, quer zu dessen Längserstreckung mit zunehmendem Radius nach der Gleichung H = I/2πr abnimmt. Somit ist die über die Induktionsspule detektierte Feldstärke ein Maß für den Abstand zwischen Induktionsspule und Sicherheitsgurt bzw. elektrischem Leiter. Ebenso lässt sich der Abstand dₛ zwischen dem Sicherheitsgurt und einer rückwärtig vom Insassen in der Sitzlehne angebrachten Induktionsspule bestimmen. Insbesondere durch dieses System kann die Art der Sitzbelegung über den gemessenen Abstand ds bestimmt werden. Die Art der Sitzbelegung kann beispielsweise differenziert werden in große oder kleine Person, schwere oder leichte Person etc.

Im folgenden werden anhand von schematischen Figuren Ausführungsbeispiele beschrieben.
- Figur 1: zeigt die Seitenansicht eines Fahrzeuginsassen innerhalb eines Fahrzeuges positioniert,
- Figur 2: zeigt die Frontansicht eines Fahrzeuginsassen, der mit einem Sicherheitsgurt gesichert ist,
- Figur 3: zeigt die Aufsicht auf einen Fahrzeuginsassen, der mit einem Sicherheitsgurt gesichert ist und an einer Sitzlehne anliegt.

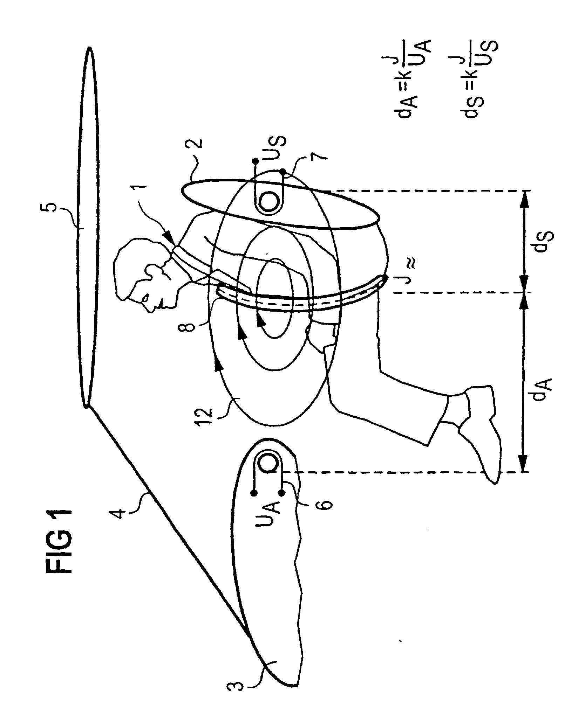

Die Seitenansicht entsprechend Figur 1 stellt Teile eines Fahrzeugs wie Windschutzscheibe 4, Armaturenbrett 3, Fahrzeugdach 5 und Sitzlehne 2 dar. Die Position eines Insassen 1 ist in der Regel eng verknüpft mit der Position einer nicht dargestellten Sitzfläche sowie der Sitzlehne 2, da der Insasse 1 auf einem Fahrzeugsitz Platz nimmt und sich entsprechend anlehnt. Innerhalb dieser Grobpositionierung sind jedoch Insassenpositionen möglich, die gewisse Nachteile mit sich bringen können. Insbesondere bei der Betrachtung der Funktionsweise von Airbags ist die Kenntnis der exakten Position eines Insassen relativ zum Airbag sehr wichtig. Da die Beweglichkeit eines Insassen in der Regel nach vorne hin größer ist als zur Seite hin und ein beispielsweise im Armaturenbrett angebrachter Airbag der Front eines Insassen gegenüberliegt, sollte dessen Betriebsweise frei von Fehlauslösungen sein. Darüber hinaus könnte durch die Kenntnis der exakten Position des Insassen während des Auslösevorganges eines Airbags dessen Auslöseverhalten beeinflusst werden.

In Figur 1 ist ein elektrischer Leiter 11 im Sicherheitsgurt 8 lediglich angedeutet. Dieser elektrische Leiter 11 erzeugt ein Magnetfeld 12, welches definiert, also in einer bekannten Weise, quer zur Längserstreckung des Sicherheitsgurtes bzw. des elektrischen Leiters abnimmt. Dabei wird ausgenutzt, dass der Sicherheitsgurt eine aktive Referenzposition für den Insassen bzw. für dessen Vorderseite darstellt. Dies geschieht in einfacher und kostengünstiger Weise und unterliegt keinerlei Störeinflüssen. Das Magnetfeld 12 wird an den an bekannten Positionen angeordneten Induktionsspulen 6, 7 gemessen, und aus der dort vorliegenden Magnetfeldstärke wird der Abstand zum Sicherheitsgurt 8 ermittelt. Dazu werden die entsprechenden Spannungsverläufe U_{A;S} detektiert und in ein entsprechendes Signal umgesetzt. Der im Sicherheitsgurt 8 enthaltene elektrische Leiter 11 wird mit einem Strom I gespeist. Aus den somit ermittelten Abstandswerten, d. h. dem Abstand d_{A} zwischen dem Sicherheitsgurt 8 und dem Armaturenbrett 3 und dem Abstand dₛ zwischen dem Sicherheitsgurt 8 und der Sitzlehne 2 läßt sich somit die genaue Sitzposition ermitteln.

Nachdem der Insasse 1 sicherlich über einen längeren Zeitraum an der Sitzlehne 2 anlehnt, kann bei einem längere Zeit vorliegenden konstanten Wert für den Abstand dₛ auf den Körperumfang bzw. den Körperdurchmesser des Insassen geschlossen werden. Damit ist die Art der Sitzbelegung differenziert, wie beispielsweise - Erwachsener oder Kind. Denkbar ist auch ein Rückschluss auf das Gewicht der Person.

In Figur 1 sind weiterhin die Gleichungen für die Berechnung der beiden genannten Abstände angegeben, wobei k eine Konstante ist sowie I der Strom und U die Spannung an den Induktionsspulen 6, 7.

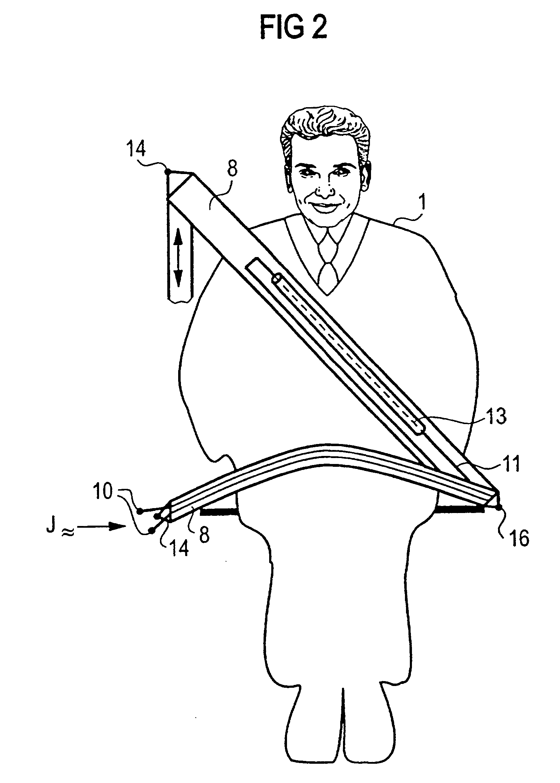

Figur 2 zeigt einen Fahrzeuginsassen 1 in der Frontansicht, der durch einen Sicherheitsgurt 8 gesichert ist. Im Sicherheitsgurt 8 erstreckt ist von einem Ende, zweckmäßigerweise vom unteren Ende des Sicherheitsgurtes 8 ein elektrischer Leiter 11 eingezogen. Dieser elektrische Leiter wird bis zu einem vorgegebenen Punkt geführt. Anschließend wird er zum Ende des Sicherheitsgurtes 8 zurückgeführt. Um durch die parallele Rückführung eine Auslöschung der Magnetfelder im Brustbereich zu vermeiden und eine definierte Feldverteilung zu erzeugen, ist in diesem Bereich die Hin- bzw. Rückführung geschirmt bzw. ungeschirmt ausgeführt. Der Sicherheitsgurt wird in seiner Konstruktion, d. h. mit den Befestigungen 14 und üblichen Aufwickelvorrichtungen nicht verändert. Es werden lediglich elektrische Leiter 11 eingezogen. Deren Zuleitungen 10 für die Stromversorgung werden an den Enden des Sicherheitsgurtes 8, vorzugsweise an einem Ende, zugeführt. Das Magnetfeld 12 wird durch den Leiter 11 vorzugsweise mit Wechselstrom I betrieben.

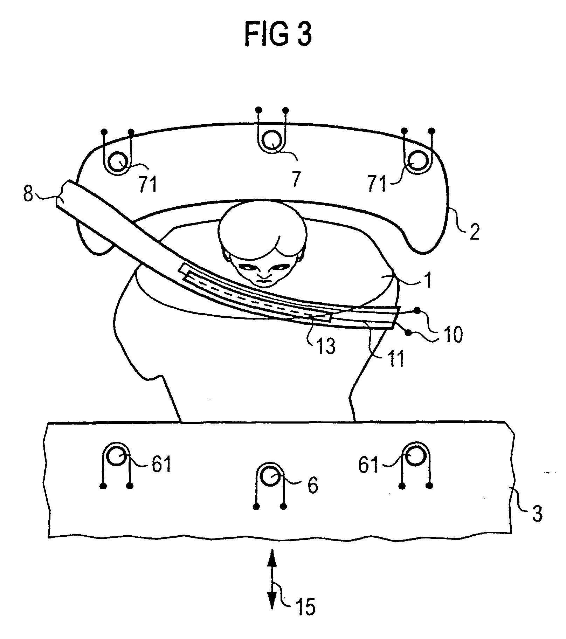

Figur 3 zeigt die Aufsicht auf einen Insassen 1, der an einer Sitzlehne 2 anlehnt. Der Sicherheitsgurt 8 ist ausschnittsweise dargestellt. Der für die Sicherheitsbetrachtungen wesentliche Bereich ist der Brustbereich des Insassen 1. Über diesen wird der Gurt 8 hinübergeführt und liegt in der Regel an der Front des Körpers des Insassen 1 an. In Figur 3 wird wiederum verdeutlicht, dass die exakte Position des Insassen 1 entsprechend der dargestellten Aufsicht zunächst durch eine im Armaturenbrett 3 oder in der Sitzlehne 2 in Fahrtrichtung vor oder hinter dem Insassen 1 angebrachte Induktionsspule 6, 7 ermittelt werden kann. Eine darüber hinausgehende seitliche Positionsveränderung des Insassen 1 kann durch quer zur Fahrtrichtung beabstandete Induktionsspulen 61, 71 detektiert werden. Weiterhin ist denkbar zur Differenzierung der Position der Front eines Insassen 1 mehrere übereinander liegende Magnetfelder 12 zu erzeugen und zu detektieren. Dies könnte beispielsweise durch das Einziehen von mehreren elektrischen Leitern 11 in den Sicherheitsgurt 8 geschehen, wobei die Zonen der Magnetfeldausbildungen jeweils bei einem angelegten Sicherheitsgurt 8 in unterschiedlichen Höhen positioniert werden. Ortsbestimmungen des Gurtes innerhalb einer Ebene, insbesondere einer lateralen, d. h. waagerechten Ebene, können beispielsweise durch Triangulation durchgeführt werden, wobei die Lage der Messempfänger, wie Induktionsspulen, vorbekannt ist. Dabei sind beliebige Kombinationen von Induktionsspulen 6, 7 bzw. 61, 71 möglich. Der Sicherheitsgurt 8 dient wiederum als Referenz für die Position eines Insassen 1 und für die Art der Sitzbelegung. Ermittelt wird der Abstand des Sicherheitsgurtes 8 bzw. der Front eines Insassen 1 zu vorgegebenen festen Punkten im Fahrzeug. Somit ist insgesamt erkennbar, ob der Insasse 1 normal an der Sitzlehne 2 anlehnt oder vorgebeugt oder seitlich geneigt ist.

Zur Gewährleistung der Störsicherheit kann das System mit bestimmten Frequenzen oder Kombinationen verschiedener Frequenzen betrieben werden. Weiterhin ist denkbar, eine definierte zeitliche Veränderung einer Frequenz bzw. einer Magnetfeldstärke vorzunehmen bzw. eine Codierung für das System einzuführen. Weiterhin können Impulsfolgen verwendet werden. Das System kann vorteilhafterweise mit 40 MHz betrieben werden oder auch auf eine vorgegebene Art und Weise getaktet werden.

In sämtlichen Ausführungen sind definierte Veränderungen auf der Sendeseite auf der Empfangsseite als bekannt vorauszusetzen.

Es ist weiterhin denkbar, dass weitere systemextern ermittelte Parameter, beispielsweise das Gewicht eines Insassen 1, zur differenzierten Auslösung eines Airbags herangezogen wird.

## Patentansprüche

1. Sensorsystem zur Bestimmung der Position eines Sicherheitsgurtes, insbesondere zur Bestimmung der Insassenposition in Fahrzeugen, bestehend aus:
- einer Anordnung mindestens eines langgestreckten elektrischen Leiters (11) zur Erzeugung mindestens eines mit zunehmendem Radius queraxial definiert abnehmenden Magnetfeldes (12),
- mindestens einem die Stärke eines Magnetfeldes (12) detektierenden Magnetfeldsensors (6; 7) wobei das Sensorsystem den Abstand (d) zwischen Magnetfeldsensor und elektrischem Leiter bestimmt,
- wobei entweder der mindestens eine langgestreckte elektrische Leiter (11) oder mindestens eine Magnetfeldsensor im Sicherheitsgurt (8) des Insassen (1) im Brustbereich angebracht ist und das entsprechend andere Teil des Sensorsystems an mindestens einem vorbestimmten Punkt im Fahrzeug angeordnet ist, so dass aus der detektierbaren Relativposition des Sicherheitsgurtes die Position des Insassen (1) ermittelbar ist.

2. Sensorsystem nach Anspruch 1, wobei der mindestens eine elektrische Leiter (11) am Sicherheitsgurt (8) positioniert ist und der mindestens eine Magnetfeldsensor in Fahrtrichtung betrachtet, vor oder hinter dem Insassen beabstandet angeordnet ist.

3. Sensorsystem nach einem der vorhergehenden Ansprüche, wobei mehrere entlang eines Sicherheitsgurtes hintereinander oder übereinander angeordnete Magnetfelder vorhanden sind.

4. Sensorsystem nach einem der vorhergehenden Ansprüche, bei dem ein mit dem Abstand vom Sicherheitsgurt definiert abnehmendes Magnetfeld durch eine Hin- und Rückführung eines elektrischen leiters (11) erzeugt wird, wobei im Brustbereich eines Insassen eine Richtung des elektrischen Leiters (11) geschirmt und die andere Richtung ungeschirmt ausgeführt ist.

5. Sensorsystem nach einem der vorhergehenden Ansprüche, wobei das System mit Wechselstrom betrieben wird und als Magnetfeldsensoren Induktionsspulen (6, 7) vorhanden sind.

6. Sensorsystem nach Anspruch 5, wobei die Frequenz des Wechselstroms im Bereich von 40 MHz liegt.

7. Sensorsystem nach einem der vorhergehenden Ansprüche, wobei das System getaktet ist.

8. Sensorsystem nach einem der vorhergehenden Ansprüche, wobei das System zur Erhöhung der Störsicherheit codiert betrieben wird.

9. Verwendung des Sensorsystems entsprechend einem der Ansprüche 1 bis 8 zur Bestimmung der Position eines Insassen (1) relativ zu einem Airbag, wobei die Signale des Sensorsystems der Ansteuerung des Airbags zuführbar sind.

10. Verwendung nach Anspruch 9, wobei die Art einer Sitzbelegung über die Ermittlung der Relativposition des Sicherheitsgurtes (8) zu einem bestimmten Teil eines Fahrzeug ermittelbar ist.

11. Verwendung nach Anspruch 10, wobei das bestimmte Teil eine Sitzlehne des Fahrzeugs ist.

12. Verwendung nach Anspruch 9, 10 oder 11, wobei mit einem elektrischen Leiter (11) und zwei Magnetfeldsensoren oder umgekehrt die zweidimensionale Position des Sicherheitsgurtes (8) relativ zum Fahrzeug oder zu einem Fahrzeugsitz mittels Triangulation ermittelbar ist.

13. Verwendung nach einem der Ansprüche 9 bis 12, wobei der Körperumfang eines Insassen ermittelbar ist.

14. Verwendung nach einem der Ansprüche 9 bis 13, wobei die Ansteuerung eines Airbags zusätzlich von weiteren bekannten Parametern, wie dem Gewicht eines Insassen (1), abhängig ist.

## Claims

1. Sensor system for determining the position of a seatbelt, in particular for determining the position of vehicle occupants in vehicles, composed of:
- an arrangement of at least one elongated electrical conductor (11) for generating at least one magnetic field (12) which decreases in a defined way in the direction of the transverse axis as the radius increases,
- at least one magnetic field sensor (6; 7) which detects the strength of a magnetic field (12), the sensor system determining the distance (d) between magnetic field sensor and electrical conductor, either the at least one elongated electrical conductor (11) or at least one magnetic field sensor being mounted on the seatbelt (8) of the vehicle occupant (1) in the chest region, and the corresponding other part of the sensor system being arranged at at least one predetermined point in the vehicle, with the result that the position of the vehicle occupant (1) can be determined from the detectable relative position of the seatbelt.

2. Sensor system according to Claim 1, the at least one electrical conductor (11) being positioned in the seatbelt (8), and the at least one magnetic field sensor being arranged, viewed in the direction of travel, some distance in front of or behind the vehicle occupant.

3. Sensor system according to one of the preceding claims, a plurality of magnetic fields which are arranged one behind the other or one above the other being provided along a seatbelt.

4. Sensor system according to one of the preceding claims, in which a magnetic field which decreases in a defined way as a function of the distance from the seatbelt is generated by routing an electrical conductor (11) in the forward and rearward directions, one direction of the electrical conductor (11) being shielded, and the other direction being unshielded, in the chest region of a vehicle occupant.

5. Sensor system according to one of the preceding claims, the system being operated with alternating current and induction coils (6, 7) being provided as magnetic field sensors.

6. Sensor system according to Claim 5, the frequency of the alternating current being in the 40 MHz range.

7. Sensor system according to one of the preceding claims, the system being clocked.

8. Sensor system according to one of the preceding claims, the system being operated in a coded fashion in order to increase the immunity to interference.

9. A use of the corresponding sensor system corresponding to one of claims 1 to 8 to determine the position of a vehicle occupant (1) relative to the airbag, the signals of the sensor system being capable of being fed to the means for actuating the airbag.

10. Use according to claim 9, it being possible to determine the type of seat occupation by means of the determination of the relative position of the seatbelt (8) with respect to a specific part of a vehicle.

11. Use according to claim 10, the specific part being a backrest of the vehicle.

12. Use according to Claim 9, 10 or 11, it being possible to determine the two-dimensional position of the seatbelt (8) relative to the vehicle or to a vehicle seat by means of triangulation by means of an electrical conductor (11) and two magnetic field sensors or vice versa.

13. Use according to one of claims 9 to 12, it being possible to determine the body size of a vehicle occupant.

14. Use according to one of claims 9 to 13, the actuation of an airbag being additionally dependent on further known parameters, such as the weight of a vehicle occupant (1).

## Revendications

1. Système de détecteurs pour la détermination de la position d'une ceinture de sécurité, notamment de position d'occupant dans des véhicules, constitué de :
- un dispositif d'au moins un conducteur électrique (11) allongé pour produire au moins un champ magnétique (12) diminuant de manière définie dans le sens axial-transversal à mesure que le rayon augmente,
- au moins un système de détecteurs de champ magnétique détectant l'intensité d'un champ magnétique (12), le système de détecteurs déterminant la distance (d) entre le système de détecteurs de champ magnétique et le conducteur électrique,
- soit le au moins un conducteur électrique (11) allongé ou au moins un système de détecteurs de champ magnétique étant disposé dans la ceinture de sécurité (8) de l'occupant (1) dans la zone de la poitrine et l'autre partie correspondante du système de détecteurs étant montée en au moins un point prédéterminé dans le véhicule, si bien que la position de l'occupant (1 ) peut être déterminée à partir de la position relative détectable de la ceinture de sécurité.

2. Système de détecteurs selon la revendication 1, le au moins un conducteur électrique (11) étant positionné sur la ceinture de sécurité (8) dont le au moins un système de détecteurs de champ magnétique vu dans le sens de la marche est disposé de manière espacée devant ou derrière l'occupant.

3. Système de détecteurs selon l'une des revendications précédentes, plusieurs champs magnétiques disposés le long d'une ceinture de sécurité les uns derrière les autres ou les uns sur les autres étant présents.

4. Système de détecteurs selon l'une des revendications précédentes, dans lequel un champ magnétique diminuant de manière définie avec la distance de la ceinture de sécurité est produit par l'amenée et le retour d'un conducteur électrique (11), une direction du conducteur électrique (11) dans la zone de la poitrine d'un occupant étant réalisée de manière blindée et l'autre direction non blindée.

5. Système de détecteurs selon l'une des revendications précédentes, ledit système de détecteurs étant exploité avec du courant alternatif et comportant des bobines à induction (6, 7) servant de détecteurs du champ magnétique.

6. Système de détecteurs selon la revendication 5, la fréquence du courant alternatif étant de l'ordre de 40 MHz.

7. Système de détecteurs selon l'une des revendications précédentes, ledit système de détecteurs étant cadencé.

8. Système de détecteurs selon l'une des revendications précédentes, ledit système de détecteurs étant exploité de manière codée afin d'augmenter son immunité aux parasites.

9. Utilisation du système de détecteurs conformément à l'une des revendications 1 à 8 pour la détermination de la position d'un occupant (1) relativement au coussin gonflable, les signaux du système de détecteurs pouvant être transmis au système de pilotage du coussin gonflable.

10. Utilisation selon la revendication 9, le type d'occupation du siège pouvant être déterminé en déterminant la position relative de la ceinture de sécurité (8) par rapport à une partie déterminée d'un véhicule.

11. Utilisation selon la revendication 10, la partie déterminée étant le dossier d'un siège du véhicule.

12. Utilisation selon la revendication 9, 10 ou 11, la position bidimensionnelle de la ceinture de sécurité (8) relative au véhicule ou un siège du véhicule pouvant être déterminé par triangulation au moyen d'un conducteur électrique (11) et de deux détecteurs de champ magnétique ou inversement.

13. Utilisation selon l'une des revendications 9 à 12, le tour de taille d'un occupant pouvant être déterminé.

14. Utilisation selon l'une des revendications 9 à 13, le pilotage d'un coussin gonflable étant en outre subordonné à d'autres paramètres connus, comme le poids d'un occupant (1).
